(19) Europäisches Patentamt
European Patent Office
Office européen des brevets

(11) **EP 2 739 943 B1**

(12) **EUROPÄISCHE PATENTSCHRIFT**

(45) Veröffentlichungstag und Bekanntmachung des Hinweises auf die Patenterteilung:
**15.01.2020 Patentblatt 2020/03**

(21) Anmeldenummer: **12740565.2**

(22) Anmeldetag: **23.07.2012**

(51) Int Cl.:
***G01F 1/66*** *(2006.01)*

(86) Internationale Anmeldenummer:
**PCT/EP2012/064370**

(87) Internationale Veröffentlichungsnummer:
**WO 2013/017447 (07.02.2013 Gazette 2013/06)**

(54) **VERFAHREN ZUM ERMITTELN DES DURCHFLUSSES MITTELS ULTRASCHALL**

METHOD FOR DETERMINING THE FLOW RATE USING ULTRASOUND

PROCÉDÉ DE DÉTERMINATION DE DÉBIT PAR ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2011 DE 102011080365**

(43) Veröffentlichungstag der Anmeldung:
**11.06.2014 Patentblatt 2014/24**

(73) Patentinhaber: **Endress+Hauser Flowtec AG 4153 Reinach (BL) (CH)**

(72) Erfinder:
• **BEZDEK, Michal 4147 Aesch (CH)**
• **UEBERSCHLAG, Pierre 68300 Saint-Louis (FR)**
• **BRUMBERG, Oliver 79618 Rheinfelden (DE)**

(74) Vertreter: **Andres, Angelika Maria Endress+Hauser (Deutschland) AG+Co. KG PatServe Colmarer Strasse 6 79576 Weil am Rhein (DE)**

(56) Entgegenhaltungen:
EP-A2- 1 798 530     WO-A1-97/19326
US-A- 5 546 813     US-A1- 2010 094 569

**Beschreibung**

Die vorliegende Erfindung betrifft ein Verfahren zum Ermitteln des Durchflusses eines Fluids durch ein kreiszylindrisches Messrohr mit einer geraden Messrohrlängsachse und einem Innendurchmesser $D_l$.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Doppler- oder nach dem Laufzeitdifferenz-Prinzip. Beim Laufzeitdifferenz-Prinzip werden die unterschiedlichen Laufzeiten von Ultraschallimpulsen relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen, beispielsweise nach $Q = K*((t_1-t_2)/(t_1*t_2))$, mit K einer Funktion der Länge des Signalpfads, des Verhältnisses zwischen radialem und axialem Sensorabstand, der Geschwindigkeitsverteilung bzw. des Strömungsprofils im Messrohr und der Querschnittsfläche, und $t_1$ bzw. $t_2$ den Laufzeiten der Signale stromauf- bzw. stromabwärts.

Beim Doppler-Prinzip werden Ultraschallwellen mit einer bestimmten Frequenz in die Flüssigkeit eingekoppelt und die von der Flüssigkeit reflektierten Ultraschallwellen ausgewertet. Aus der Frequenzverschiebung zwischen den eingekoppelten und reflektierten Wellen lässt sich ebenfalls die Fließgeschwindigkeit der Flüssigkeit bestimmen. Reflexionen in der Flüssigkeit treten auf, wenn Luftbläschen oder Verunreinigungen in dieser vorhanden sind, so dass dieses Prinzip hauptsächlich bei verunreinigten Flüssigkeiten Verwendung findet.

Die Ultraschallwellen werden mit Hilfe so genannter Ultraschallwandler erzeugt bzw. empfangen. Hierfür sind Ultraschallwandler in der Rohrwandung des betreffenden Rohrleitungsabschnitts fest angebracht. Es sind auch Clamp-on-Ultraschall-Durchflussmesssysteme erhältlich. Bei diesen Systemen werden die Ultraschallwandler von außerhalb des Messrohrs an dessen Rohrwand gepresst. Ein großer Vorteil von Clamp-On-Ultraschall-Durchflussmesssystemen ist, dass sie das Messmedium nicht berühren und auf eine bereits bestehende Rohrleitung angebracht werden.

Ein weiteres Ultraschall-Durchflussmessgerät, das nach dem Laufzeitdifferenz-Prinzip arbeitet, ist aus der US-A 50 52 230 bekannt. Die Laufzeit wird hier mittels kurzen Ultraschallimpulsen, so genannten Bursts, ermittelt.

Die WO 97/19326 A1 offenbart ein Ultraschall-Durchflussmessgerät und ein Verfahren zu dessen Betrieb. Es wird zudem eine Ermittlung einer modifizierten Reynoldszahl und eine Korrektur der Durchflussgeschwindigkeit anhand dieser modifizierten Reynoldszahl offenbart.

Die Ultraschallwandler bestehen normalerweise aus einem elektromechanischen Wandlerelement, z.B. ein piezoelektrisches Element, und einer Koppelschicht. Im elektromechanischen Wandlerelement werden die Ultraschallwellen erzeugt und über die Koppelschicht zur Rohrwandung geführt und von dort in die Flüssigkeit geleitet, bei Clamp-On-Systemen, oder sie werden bei Inline-Systemen über die Koppelschicht in das Messmedium eingekoppelt. Dann wird die Koppelschicht auch seltener Membran genannt.

Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflektion an Grenzschichten zwischen zwei Materialen.

Sowohl bei Clamp-On-Systemen, als auch bei Inline-Systemen sind die Ultraschallwandler in einer gemeinsamen Ebene am Messrohr angeordnet, entweder auf gegenüberliegenden Seiten des Messrohrs, dann verläuft das akustische Signal, projiziert auf einen Rohrquerschnitt, einmal entlang einer Sekante durch das Messrohr, oder auf derselben Seite des Messrohrs, dann wird das akustische Signal an der gegenüberliegenden Seite des Messrohrs reflektiert, wodurch das akustische Signal zweimal das Messrohr entlang der auf den Querschnitt durch das Messrohr projizierten Sekante durchquert. Die US 4,103,551 und die US 4,610,167 zeigen Ultraschall-Durchflussmessgeräte mit Reflexionen an dafür im Messrohr vorgesehenen Reflexionsflächen. Nun sind auch Mehrpfad-Systeme bekannt geworden, welche mehrere Ultraschallwandlerpaare aufweist, welche jeweils einen Signalpfad bilden, entlang welchem die akustischen Signale durch das Messrohr verlaufen. Die jeweiligen Signalpfade und die zugehörigen Ultraschallwandler liegen dabei in zueinander parallelen und zur Messrohrachse parallelen Ebenen. Die US 4,024,760 oder die US 7,706,986 zeigen beispielhaft solch Mehrpfad-Systeme. Ein Vorteil von Mehrpfad-Systemen ist, dass sie das Profil der Strömung des Messmediums im Messrohr an mehreren Stellen vermessen und dadurch hochgenaue Messwerte für den Durchfluss bereitstellen können. Erreicht wird dies unter anderem auch dadurch, dass die einzelnen Laufzeiten entlang der unterschiedlichen Signalpfade verschieden gewichtet werden. Nachteilig bei Mehrpfad-Systemen sind jedoch ihre Herstellungskosten, da mehrere Ultraschallwandler und gegebenenfalls eine aufwendige Auswerteelektronik verbaut sind.

Zur Gewichtung der Signalpfade gibt es verschiedene Arbeiten. Der Aufsatz "Comparsion of integration methods for multipath accoustic discharge measurements" von T. Tresch, T. Staubli und P. Gruber in der Begleitschrift zur 6th international Conference on Innovation in Hydraulic Efficiency Measurements, 30 Juli - 1. August 2006 in Portland, Oregon, USA, vergleicht gängige Methoden zur Gewichtung der Laufzeiten entlang unterschiedlicher Signalpfade zur Berechnung des Durchflusses.

Die DE 10 2005 059 062 B4 und die DE 10 2006 030 964 A1 offenbaren Verfahren zur Korrektur eines ersten Durchflusswerts eines gasförmigen Fluids durch ein Messrohr mit Wasserdampf als eine Komponente. Die Konzentration des Wasserdampfs wird mittels Temperatur und/oder Schallgeschwindigkeit bestimmt oder festgelegt und anschließend die Konzentrationen einer oder weiterer Komponenten des gasförmigen Fluids ermittelt und der Durchflusswert korrigiert.

Die US 5 835 884 A offenbart eine Bestimmung der mittleren Durchflussgeschwindigkeit eines Fluids vorgeschlagen. Dabei wird ein Volumenstrom im laminaren Bereich (RN=2000) und im turbulenten Bereich (RN=4000) gemessen und die mittlere Durchflussgeschwindigkeit für Reynoldszahlbereiche zwischen 2000-4000 durch ein logarithmisches Interpolierungsverfahren zwischen dem beiden oben genannten Werten ermittelt. Eine Anwendung dieses Verfahrens auf kohlenwasserstoffhaltige Gasgemische wird nicht offenbart.

Die JP 56 140 214 A, die US 4 300 400, die US 5 546 813, die EP 1 113 247 A1 und die US 4 331 025 A offenbaren jeweils Verfahren zur Berechnung der Strömungsgeschwindigkeit anhand einer Funktion der Reynoldszahl Re und des Radius r. Keines dieser Dokumente beschäftigt sich allerdings mit dem Problem der Messung von Gasgemischen und den hierbei auftretenden spezifischen Problemen.

Die vorgenannten Druckschriften beschäftigen sich ausschließlich mit der Messung einer Durchflussmessung eines Fluids, jedoch nicht speziell mit einem Gasgemisch, bei welcher nicht nur die Durchflussmessung - sondern auch die Zusammensetzung im Fokus steht und bei welcher einzelne ermittelte Werte von Messgrößen zur Bestimmung der Durchflussmessung und der Zusammensetzung zu einer Bestimmung weiterer physikalischer Größen und Eigenschaften herangezogen werden können.

Das vorliegende Verfahren setzt somit bei der Aufgabe an, ein entsprechendes Verfahren bereitzustellen, welches die beschriebenen Probleme überwindet.

Die Aufgabe der Erfindung besteht darin, ein Verfahren zur Durchflussmessung mittels Ultraschall insbesondere auch für Gasgemische bereitzustellen, welches hochgenaue Messergebnisse liefert.

Die Aufgabe wird gelöst durch den Gegenstand des unabhängigen Anspruchs 1. Weiterbildungen und Ausgestaltungen der Erfindung finden sich in den Merkmalen der jeweils abhängigen Ansprüche wieder.

Erfindungsgemäß wird eine Laufzeitdifferenzmessung von akustischen Signalen entlang eines Signalpfads in einem kreiszylindrischen Messrohr mit einer geraden Messrohrlängsachse und einem Innendurchmesser $D_I$ durchgeführt. Dies geschieht vorzugsweise mit einem geeigneten Ultraschall-Durchflussmessgerät. Die Laufzeitdifferenzmessung von akustischen Signalen entlang eines Signalpfads zwischen zwei Ultraschallwandlern stromauf- und stromabwärts ist dem Fachmann bekannt.

Sowohl als Sender, als auch als Empfänger dienen üblicherweise Ultraschallwandler, insbesondere elektromechanische Wandler, z.B. piezoelektrische Elemente, welche geeignet sind, das akustische Signal, insbesondere einen Ultraschallimpuls oder eine oder mehrere Ultraschallwellen, zu Senden, als auch zu Empfangen. Werden Ultraschallwandler als Sender und Empfänger eingesetzt, kann das akustische Signal entlang dem ersten Signalpfad hin und wieder zurück, also in zwei Richtungen, verlaufen. Sender und Empfänger sind somit vertauschbar.

Als Signalpfad, auch akustischer Pfad genannt, wird der Weg des akustischen Signals, also z.B. der Ultraschallwelle oder des Ultraschallimpulses, zwischen dem Sender, welcher das akustische Signal aussendet, und dem Empfänger, welcher das akustische Signal empfängt, bezeichnet. In einer Ausgestaltung der Erfindung wird das akustische Signal senkrecht zur Membran abgestrahlt. Der Empfänger ist dann so im oder am Messrohr platziert, dass das Signal wiederum senkrecht auf seine Membran trifft.

Besteht der Signalpfad aus mehreren geraden Teilabschnitten, wird beispielsweise das akustische Signal an einer oder mehreren Reflexionsflächen, das sind Grenzflächen, z.B. gebildet zwischen Fluid und Messrohr oder einem am oder im Messrohr angeordneten Reflektor, reflektiert, weisen alle geraden Teilabschnitte den gleichen Abstand zur Messrohrachse auf, insbesondere verlaufen der Signalpfad und damit alle seine Teilabschnitte j in einer Ebene parallel zur Messrohrachse, welcher Abstand $d_j$ insbesondere ungleich ungefähr einem Viertel des Innendurchmessers $D_I$ ist ($d_j \neq D_I/4$). Gemäß einer Weiterbildung der Erfindung liegt der Signalpfad in einer Ebene, in welcher die Messrohrachse liegt. Auf einen Querschnitt des Messrohrs projiziert ergibt sich der Innendurchmessers $D_I$, da der Abstand sämtlicher Teilabschnitte des Signalpfads zur Messrohrlängsachse Null ist. Das Ergebnis der Laufzeitdifferenzmessung ist eine mittlere Durchflussgeschwindigkeit $v_L$.

Ein weiterer Verfahrensschritt ist einer Ausgestaltung des erfindungsgemäßen Verfahrens nach die Ermittlung der kinematischen Viskosität $v_{kin}$ des Fluids. Die kinematische Viskosität $v_{kin}$ hängt mit der dynamischen Viskosität $\mu_{dyn}$ folgendermaßen zusammen: $v_{kin} = \mu_{dyn}/\rho$. Wird entsprechend die dynamische Viskosität $\mu_{dyn}$ ermittelt und ist die Dichte $\rho$ bekannt oder wird auch diese ermittelt, ist dies gleichbedeutend mit der Ermittlung der kinematischen Viskosität $v_{kin}$.

Es gibt viele Varianten, die kinematische Viskosität $v_{kin}$ des Gasgemisches zu ermitteln. Beispielsweise über eine Tabelle, mittels mathematischer Formeln oder durch lineare Interpolation zwischen bekannten Werten. Die kinematische Viskosität $v_{kin}$ des Fluids kann dabei von unterschiedlichen Größen abhängen und entsprechend ermittelt werden.

Ist die chemische Zusammensetzung des Gasgemisches mit den einzelnen Stoffmengenanteilen $x_i$ seiner Komponenten i bei einem Mehrkomponentensystem bekannt, beispielsweise durch Eingabe durch den Benutzer oder durch, gegebenenfalls auch separate, Ermittlung, wird die kinematische Viskosität $v_{kin}$ des Fluids beispielsweise ermittelt über die zusätzliche Angabe der Temperatur T des Fluids. Dazu kann ein Temperaturfühler vorgesehen sein.

Unter Berücksichtigung des Stoffmengenanteils $x_i$ der einzelnen Komponenten i des Gasgemisches ist zu verstehen, dass zumindest die Schallgeschwindigkeit und die Temperatur vorgegeben oder gemessen werden, da diese Größen eine Berechnung des Stoffmengenanteils ermöglichen. Somit kann der Stoffmengenanteil direkt in die Berechnung der dynamischen Viskosität einbezogen werden und damit berücksichtigt werden.

Da der Stoffmengenanteil über die Schallgeschwindigkeit und die Temperatur des Mediums berechnet werden kann, kann somit durch Einbeziehung der Temperatur und der Schallgeschwindigkeit in die Berechnung der kinematischen Viskosität der Stoffmengenanteil indirekt berücksichtigt werden.

Bei Gasgemischen, insbesondere bei Biogasen unterliegt allerdings das Gasgemisch einer stetig veränderlichen Zusammensetzung. Dabei kann die veränderliche kinematische Viskosität durch eine sogenannte Echtzeitmessung bestimmt werden. Das heißt, dass zusätzlich zum Durchfluss zumindest eine veränderliche Größe in einem Zeitintervall wiederholt gemessen wird. Dies ist vorzugsweise die Schallgeschwindigkeit des Gasgemisches, aus welcher im Anschluss bei konstanter Temperatur und konstantem Druck ein Rückschluss auf eine Änderung der Stoffmengenanteile des Gasgemisches und/oder direkt auf die kinematische Viskosität getroffen werden können. Ein bevorzugtes Wiederholungsintervall liegt zwischen 5-500 msec (Millisekunden), besonders bevorzugt jedoch zwischen 10-250 msec.

Es ist von Vorteil, wenn die kinematische Viskosität $v_{kin}$ des Gasgemisches durch Messung der Temperatur des Gasgemisches und der Schallgeschwindigkeit c des Gasgemisches, sowie aus vorgegebenen Größen, welche zur Bestimmung der stoffspezifischen Eigenschaften benötigt werden, ermittelt wurde.

Die dynamische Viskosität des Gasgemisches erfolgt vorteilhaft durch Vorgabe und/oder Messung

der relativen Feuchte des Gasgemisches und
des Druckes des Gasgemisches und/oder der Dichte des Gasgemisches in Kombination mit der ermittelten kinematischen Viskosität $v_{kin}$ des Gasgemisches ermittelt wird.

Gerade bei Gasgemischen mit zeitlich variabler Zusammensetzung, beispielsweise Biogas, ändert sich oft die Temperatur des Gasgemisches insgesamt. Diese Veränderungen müssen bei der Bestimmung der kinematischen Viskosität berücksichtigt werden. Dabei kann sich für diese Größen eine Einmalmessung als ungenügend erweisen und eine Messwiederholung in einem Zeitintervall kann vorteilhaft sein. Das Messintervall zur Temperaturmessung liegt dabei vorzugsweise bei maximal 5 min, insbesondere zwischen 5 sec. und 2 min.

Zusätzlich kann auch eine optionale Messung des Druck und der relativen Feuchtigkeit in den vorgenannten Zeitintervallen wiederholt werden.

Um eine genaue Messung mit geringen Fehlerabweichungen zu ermöglichen ist es von Vorteil, wenn der Kohlenwasserstoff einen Stoffmengenanteil $x_i$ von mindestens 0,1 bezogen auf die Gesamtmasse des Gasgemisches, aufweist.

Alternativ wird die kinematische Viskosität $v_{kin}$ des Fluids ermittelt in Abhängigkeit von der Schallgeschwindigkeit c im Fluid, der Temperatur T des Fluids, dem Absolutdruck p des Fluids und der chemischen Zusammensetzung des Fluids. Schallgeschwindigkeit c im Fluid und Temperatur T des Fluids können dabei vom Ultraschall-Durchflussmessgerät in bekannter Art und Weise ermittelt werden, oder sie werden separat ermittelt. Gleichermaßen ist auch die Dichte $\rho$ des Fluids ermittelbar.

Dies sind nur einige Beispiele ohne Anspruch auf Vollständigkeit. Weitere Methoden der Ermittlung der kinematischen Viskosität $v_{kin}$ des Fluids sollen damit nicht ausgeschlossen werden.

Daher können weitere Verfahrensschritte dem Verfahrensschritt der Ermittlung der modifizierten Reynoldszahl $Re^{mod}$ vorangehen. Beispielsweise die Ermittlung der chemischen Zusammensetzung des Fluids und/oder die Ermittlung der Stoffmengenanteile $x_i$ der einzelnen Komponenten i des Fluids, wobei diese auch vom Benutzer vorgegeben werden können, und/oder die Ermittlung der Schallgeschwindigkeit c im Fluid und/oder die Ermittlung der Temperatur T des Fluids und/oder die Ermittlung des Absolutdrucks p im Fluid, wobei anschließend die kinematische Viskosität $v_{kin}$ des Fluids in Abhängigkeit von einem oder mehreren dieser Parameter in geeigneter Art und Weise ermittelt wird. Bei gasförmigen Fluiden spielt die Ermittlung des Absolutdrucks p eine größere Rolle, wie bei flüssigen Fluiden, da die meisten praktisch als inkompressibel angesehen werden können.

Wird als Fluid gemäß einer Weiterbildung der Erfindung ein Gas, insbesondere ein Biogas mit den Komponenten Methan, Wasser und Kohlestoffdioxid verwendet, welches Biogas auch weitere Komponenten aufweisen kann, wie z. B. Stickstoff, Sauerstoff, Wasserstoff, Schwefelwasserstoff und/oder Ammoniak, so lehrt die DE 10 2006 030 964 A1, die relative Feuchte des Fluids mit 100% anzunehmen oder zusätzlich eine Feuchtemesseinheit vorzusehen, um die Konzentration des Wassers in Abhängigkeit von der Temperatur T und der relativen Feuchte RH zu ermitteln und bei der Bestimmung der Konzentrationen von Methan und Kohlenstoffdioxid zu berücksichtigen. Dies soll hier ebenfalls mit umfasst sein.

Im nächsten Verfahrensschritt wird eine modifizierte Reynoldszahl $Re^{mod}$ gemäß der Formel $Re^{mod} = (v_L * D_I)/v_{kin}$

ermittelt, wobei anschließend eine zweite, über die Querschnittsfläche des Messrohrs gemittelte Durchflussgeschwindigkeit $v_A$ mittels einer bekannten Funktion $v_A = f(Re^{mod})$ in Abhängigkeit von der modifizierten Reynoldszahl $Re^{mod}$ ermittelt und gemäß einer Weiterbildung der Erfindung vom Gerät ausgegeben wird. Dabei drückt die Funktion $v_A = f(Re^{mod})$ im Sinne der vorliegenden Erfindung keine Formel im mathematischen Sinne, sondern ein Proportionalitätsverhältnis zwischen $v_A$ und $f(Re^{mod})$ aus.

Unter Berücksichtigung der ersten mittleren Durchflussgeschwindigkeit $v_L$ lautet die konkrete Formel zur Berechnung der zweiten mittleren Durchflussgeschwindigkeit $v_A$ folgendermaßen: $v_A = f(Re^{mod})*v_L$

In einer erfindungsgemäßen Variante wird der Volumendurchfluss $Q_V = v_A*(\pi/4)*D_i^2$ und/oder der Massendurchflusses $Q_M = Q_V*\rho$, mit der Dichte $\rho$ des Fluids, errechnet und anschließend vom Gerät ausgegeben.

Zur Ermittlung der Funktion $v_A = f(Re^{mod})$ existieren, analog zur Ermittlung der kinematischen Viskosität $v_{kin}$, ebenfalls viele Möglichkeiten. Eine davon ist, das Verhältnis von $v_L/v_A$ zur Reynoldszahl Re bzw. zur modifizierten Reynoldszahl $Re^{mod}$, z.B. in einer geeigneten Kalibrieranlage, experimentell näher zu untersuchen und in einer Funktionsvorschrift f festzuhalten. Bei konstanter Reynoldszahl ist $v_L$ proportional zu $v_A$: $v_A = f(Re^{mod})*v_L$. Die Beziehung $v_A/v_L$ zu $Re^{mod}$ ist allgemein gültig für alle Fluide. Deshalb muss in der Kalibireranlage auch nicht unbedingt dasselbe Fluid wie im Feld verwendet werden.

Zur Durchführung des Verfahrens findet ein Ultraschall-Durchflussmessgerät mit einem kreiszylindrischen Messrohr, einer geraden Messrohrlängsachse, einem Innendurchmesser $D_I$, zwei Ultraschallwandlern zur Laufzeitdifferenzmessung eines akustischen Signals entlang eines Signalpfads im Messrohr und einer geeigneten Umformereinheit zur Auswertung der Laufzeitdifferenzmessung und zur Durchführung des erfindungsgemäßen Verfahrens Verwendung, insbesondere ein so genanntes Inline-Ultraschall-Durchflussmessgerät mit einem Mess- oder Signalpfad, welcher mittig angeordnet ist.

Die Erfindung lässt zahlreiche Ausführungsformen zu. Eine soll hier kurz anhand der nachfolgenden Figur näher erläutert werden.

Fig. 1 zeigt ein Flussdiagramm einer Ausgestaltung des erfindungsgemäßen Verfahrens,
Fig. 2 zeigt schematisch ein Inline-Ultraschall-Durchflussmessgerät.

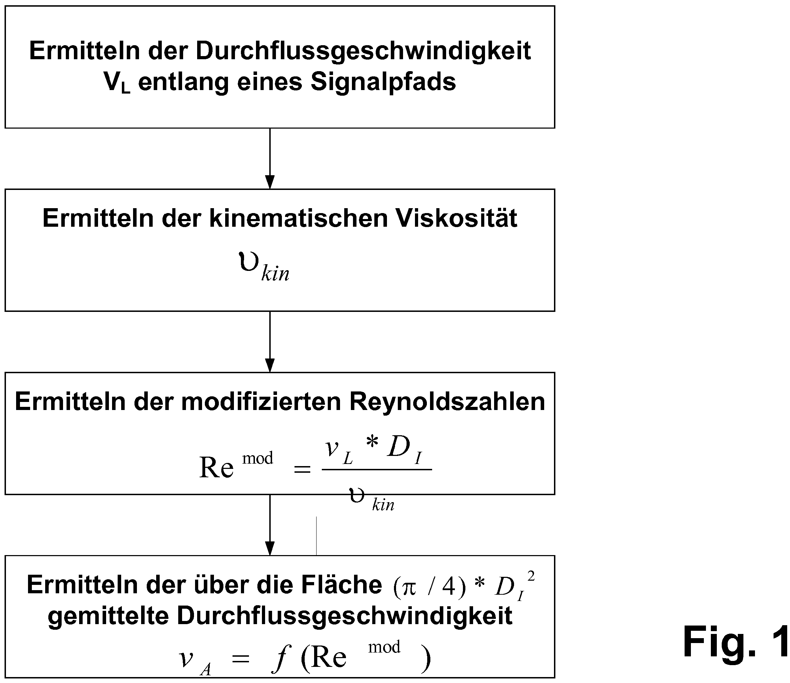

In Fig. 1 ist ein Flussdiagramm einer Ausgestaltung des erfindungsgemäßen Verfahrens dargestellt. Ausgangspunkt ist, wie bei der DE 10 2006 030 964 A1, die Durchflussmessung eines Biogases mit den oben genannten Komponenten fließt durch ein Messrohr.

Der Anteil an Wasserdampf wird abgeschätzt oder mit einer Feuchtemesseinheit gemessen.

Dann lässt sich über die gemessene Schallgeschwindigkeit c und die gemessene Temperatur T und gegebenenfalls dem gemessenen Druck p, die dynamische oder auch die kinematische Viskosität von Biogas über entsprechende Algorithmen ermitteln. Über die Formel $Re^{mod} = (v_L*D_I)/v_{kin}$ ergibt sich die modifizierte Reynoldszahl.

Aus einer bekannten Beziehung $v_A/v_L$ zu Re lässt sich dann die vom Durchflussmessgerät ausgegebene Strömungsgeschwindigkeit $v_A$ in Abhängigkeit von der Reynoldszahl korrigieren.

Die Reynoldszahl ergibt sich über die Formel $Re = (v_A*D_I)/v_{kin}$, wobei $v_A$ die über den gesamten Messrohrquerschnitt gemittelte Durchflussgeschwindigkeit des Fluids durch das Messrohr ist. Es handelt sich bei $v_A$ somit um das Flächenintegral. $v_L$ ist hingegen die mittlere Durchflussgeschwindigkeit gemessen entlang des Signalpfads und entsprechend das Linienintegral entlang des Signalpfads.

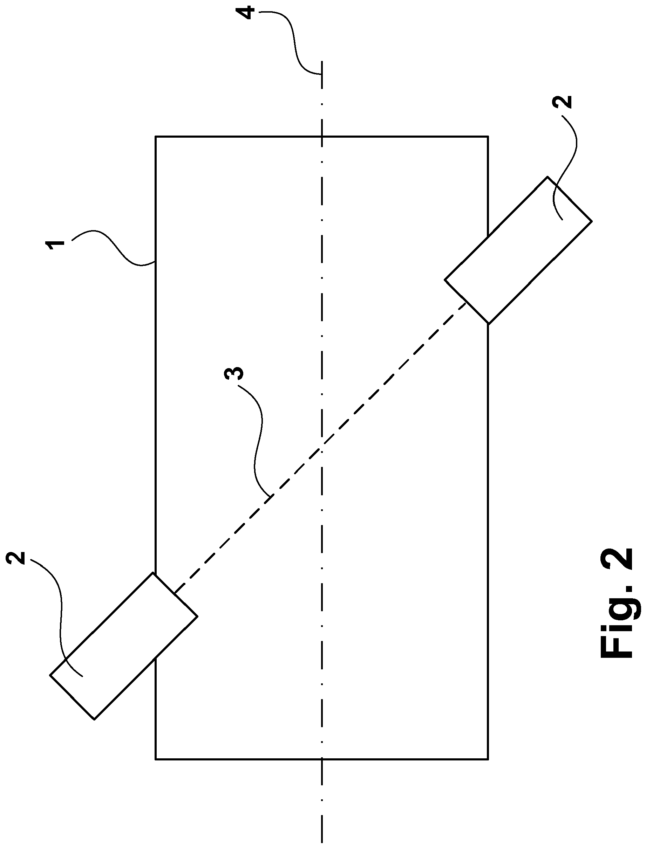

Fig. 2 veranschaulicht schematisch die dem Fachmann bestens bekannte Bauweise eines Einpfad-Inline-Ultraschall-Durchflussmessgeräts mit zwei im Messrohr 1 fluidberührend angeordneten Ultraschallwandlern 2. Der Signalpfad 3 zwischen den Ultraschallwandlern 2 weist eine vorgegebene Neigung gegenüber der Messrohrachse 4 auf, welche eine Laufzeitdifferenzmessung ermöglicht.

Im Folgenden soll anhand eines Algorithmusbeispiels die Ermittlung der dynamischen Viskosität dargestellt werden.

$$\eta = (0.0003229*T^3 - 0.0071429*T^2 - 0.1327381*T - 180.014)*10^{-6}*X^2_{CH4}$$

$$+ (0.030833*T^3 - 2.43678*T^2 - 48.39*T - 15616.83)*10^{-6}*X_{CH4}$$

$$+ (-7.8125*T^3 + 432.1428*T^2 + 38303.6*T + 13704714)*10^{-6}$$

Anhand dieses Algorithmus kann man erkennen, dass die dynamische Viskosität anhand der Temperatur des Biogases und des Stoffmengenanteils an Methan im Biogas berechenbar ist.

Dabei wird berücksichtigt, dass der Stoffmengenanteil als molare Anteile bzw. Volumenanteil in % angegeben ist und eine Temperatur in °C in einem Bereich zwischen 0-80°C aufweist, wobei die Viskosität mit einer Genauigkeit von 0,5% - vorzugsweise 0,2% - bei 1 bar berechnet werden kann, soweit keine Fremdgaseinwirkung vorliegt.

Die Dichte in kg/m$^3$ kann über die folgende Formel berechnet warden

$$\rho = \frac{p}{K.T}$$

mit dem vorgegebenen oder ermittelten Druck in mbar und der gemessenen Temperatur in Kelvin.

Dabei setzt sich K aus folgenden Werten zusammen:

$$K = \frac{1}{\frac{X_{CO2}}{1.885} + \frac{X_{CH4}}{5.18} + \frac{X_{H20}}{4.61} + \frac{X_{N2}}{2.97} + \frac{X_{O2}}{2.6}} \; ,$$

wobei X in diesem Fall zwischen 0-1 skaliert ist

**Die kinematische Viskosität kann im Anschluss durch die Beziehung:** $v = \eta/\rho$ ermittelt werden.

Die Reynoldszahl Re weist folgende Abhängigkeit auf:

$$Re = V.D/v \text{ or } Re = \rho.V.D/\eta$$

**Bezugszeichenliste**

1 Messrohr
2 Ultraschallwandler
3 Signalpfad
4 Messrohrachse

**Patentansprüche**

1. Verfahren zum Ermitteln des Durchflusses eines Gasgemisches, wobei zumindest eine Komponente i des Gasgemisches ein Kohlenwasserstoff ist, durch ein kreiszylindrisches Messrohr mit einer geraden Messrohrlängsachse und einem Innendurchmesser $D_I$, mit folgenden Verfahrensschritten:
Ermitteln einer ersten mittleren Durchflussgeschwindigkeit $v_L$ mittels Laufzeitdifferenzmessung von akustischen Signalen entlang eines Signalpfads;
Ermitteln der kinematischen Viskosität $v_{kin}$ des Gasgemisches unter Ermittlung oder Vorgabe des Stoffmengenanteils $x_i$ der einzelnen Komponenten i des Gasgemisches;
Ermitteln einer modifizierten Reynoldszahl Re$^{mod}$ gemäß der Formel Re$^{mod}$ = $(v_L*D_I)/v_{kin}$, Ermitteln einer zweiten mittleren Durchflussgeschwindigkeit $v_A$ mittels einer bekannten Funktion $v_A$ = f(Re$^{mod}$)*$v_L$ in Abhängigkeit von der modifizierten Reynoldszahl Re$^{mod}$ und der ermittelten ersten mittleren Durchflussgeschwindigkeit $v_L$, wobei dem Verfahrensschritt der Ermittlung der modifizierten Reynoldszahl Re$^{mod}$ der Verfahrensschritt des Ermittelns der kinematischen Viskosität $v_{kin}$ des Gasgemisches vorangeht,
wobei f(Re$^{mod}$) mittels Untersuchung eines Verhältnisses $v_L/v_A$ in einer Kalibrieranlage bestimmt wird.

2. Verfahren nach Anspruch 1, **dadurch gekennzeichnet, dass** eine Bestimmung einer Schallgeschwindigkeit zur Bestimmung des Stoffmengenanteils $x_i$ der einzelnen Komponenten i des Gasgemisches oder der kinematischen Viskosität $v_{kin}$ in einem Zeitintervall wiederholt wird.

3. Verfahren nach Anspruch 1 oder 2, **dadurch gekennzeichnet, dass** die kinematische Viskosität $v_{kin}$ des Gasgemisches durch Messung der Temperatur des Gasgemisches und der Schallgeschwindigkeit c des Gasgemisches, sowie aus vorgegebenen Größen, welche zur Bestimmung der stoffspezifischen Eigenschaften benötigt werden, ermittelt wurde.

**4.** Verfahren nach einem der vorhergehenden Ansprüche, **dadurch gekennzeichnet, dass** die dynamische Viskosität des Gasgemisches durch Vorgabe und/oder Messung der relativen Feuchte des Gasgemisches und des Druckes des Gasgemisches und/oder der Dichte des Gasgemisches in Kombination mit der ermittelten kinematischen Viskosität $v_{kin}$ des Gasgemisches ermittelt wird.

**5.** Verfahren nach einem der vorhergehenden Ansprüche, **dadurch gekennzeichnet, dass** der Kohlenwasserstoff einen Stoffmengenanteil $x_i$ von mindestens 10%, bezogen auf das Gesamtvolumen des Gasgemisches, aufweist.

**6.** Verfahren nach einem der vorhergehenden Ansprüche,
**dadurch gekennzeichnet,**
**dass** folgende Verfahrensschritte folgen:
Ermitteln des Volumendurchflusses $Q_V = v_A*(\pi/4)*D_I^2$, und/oder des Massendurchflusses $Q_M = Q_V*\rho$, mit der Dichte $\rho$ des Gasgemisches.

**7.** Verfahren nach einem der vorhergehenden Ansprüche,
**dadurch gekennzeichnet,**
**dass** folgende Verfahrensschritte folgen:
Ausgeben der zweiten mittleren Durchflussgeschwindigkeit $v_A$ und/oder des Volumendurchflusses $Q_V$ und/oder des Massendurchflusses $Q_M$.

**8.** Verfahren nach einem der Ansprüche 1 bis 7,
**dadurch gekennzeichnet,**
**dass** der Signalpfad aus einem oder mehreren geraden Teilabschnitten besteht, welche jeweils den gleichen Abstand zur Messrohrlängsachse aufweisen.

**9.** Verfahren nach Anspruch 7,
**dadurch gekennzeichnet,**
**dass** der Abstand der Teilabschnitte des Signalpfads zur Messrohrlängsachse Null ist.

**10.** Verfahren nach Anspruch 1,
**dadurch gekennzeichnet,**
**dass** das Ermitteln der kinematischen Viskosität $v_{kin}$ des Gasgemisches erfolgt unter Berücksichtigung von:
Der chemischen Zusammensetzung des Gasgemisches;

**11.** Verfahren nach Anspruch 10, **dadurch gekennzeichnet, dass** der Stoffmengenanteil $x_i$ der einzelnen Komponente i des Gasgemisches der Methananteil des Gasgemisches ist

**12.** Verfahren nach Anspruch 9 bis 11,
**dadurch gekennzeichnet,**
**dass** die chemische Zusammensetzung des Gasgemisches und/oder die Stoffmengenanteile $x_i$ dessen einzelner Komponenten i vom Benutzer vorgegeben werden.

**13.** Verfahren nach einem der Ansprüche 8 bis 12,
**dadurch gekennzeichnet,**
**dass** das Ermitteln der kinematischen Viskosität $v_{kin}$ des Gasgemisches erfolgt unter Berücksichtigung von:

Der Temperatur T des Gasgemisches und/oder
der Schallgeschwindigkeit c des Gasgemisches.

**14.** Verfahren nach einem der Ansprüche 1 bis 13,
**dadurch gekennzeichnet,**
**dass** das Gasgemisch ein Biogas ist, umfassend die Komponenten Methan, Wasser und Kohlestoffdioxid.

**15.** Verfahren nach einem der Ansprüche 1 bis 14,
**dadurch gekennzeichnet,**
**dass** ein Ermitteln, vorzugsweise einmaliges Ermitteln, der Funktionsvorschrift $f(Re^{mod})$ erfolgt; ein periodisches Bestimmen der ersten mittleren Durchflussgeschwindigkeit $v_L$ erfolgt; und eine Berechnung der zweiten mittleren Durchflussgeschwindigkeit anhand der Formel $v_A = f(Re^{mod})*v_L$ durchgeführt wird.

**Claims**

1. Procedure to determine the flow of a gas mixture - wherein at least one component i of the gas mixture is a hydrocarbon - through a circular cylindrical measuring tube with a straight longitudinal axis of the measuring tube and an inner diameter $D_I$, with the following procedural steps:

   Determination of a first average flow velocity $v_L$ using the measurement of the runtime difference of acoustic signals along a signal path;
   Determination of the kinematic viscosity $v_{kin}$ of the gas mixture by determining or specifying the molar fraction $x_i$ of the different components i of the gas mixture;
   Determination of a modified Reynolds number $Re^{mod}$ according to the formula $Re^{mod} = (v_L {}^* D_I)/v_{kin}$,
   Determination of a second average flow velocity $v_A$ using a known function $v_A = f(Re^{mod})^* v_L$ depending on the modified Reynolds number $Re^{mod}$ and the determined first average flow velocity $v_L$, wherein the step involving the determination of the kinematic viscosity $v_{kin}$ of the gas mixture precedes the step involving the determination of the modified Reynolds number $Re^{mod}$, wherein $f/(Re^{mod})$ is determined by analyzing a ratio $v_L / v_A$ in a calibration rig.

2. Procedure as claimed in Claim 1, **characterized in that** a determination of a sound velocity to determine the molar fraction $x_i$ of the individual components i of the gas mixture or the kinematic viscosity $v_{kin}$ is repeated in a time interval.

3. Procedure as claimed in Claim 1 or 2, **characterized in that** the kinematic viscosity $v_{kin}$ of the gas mixture has been determined by measuring the temperature of the gas mixture and the sound velocity c of the gas mixture, and from predefined variables which are needed to determine the substance-specific properties.

4. Procedure as claimed in one of the previous claims, **characterized in that** the dynamic viscosity of the gas mixture is determined by specifying and/or measuring the relative humidity of the gas mixture and the pressure of the gas mixture and/or the density of the gas mixture in combination with the kinematic viscosity $v_{kin}$ determined for the gas mixture.

5. Procedure as claimed in one of the previous claims, **characterized in that** the hydrocarbon has a molar fraction $x_i$ of at least 10% in relation to the total volume of the gas mixture.

6. Procedure as claimed in one of the previous claims,
   **characterized in that**
   the following procedure steps follow:
   Determination of the volume flow $Q_v = v_A {}^*(\pi/4)^* D_i{}^2$, and/or the mass flow $Q_M = Q_v {}^*\rho$, with the density $\rho$ of the gas mixture.

7. Procedure as claimed in one of the previous claims,
   **characterized in that**
   the following procedure steps follow:
   Outputting of the second average flow velocity $v_A$ and/or the volume flow $Q_v$ and/or the mass flow $Q_M$.

8. Procedure as claimed in one of the Claims 1 to 7,
   **characterized in that**
   the signal path consists of one or several straight subsections, which each are at the same from the longitudinal axis of the measuring tube.

9. Procedure as claimed in Claim 7,
   **characterized in that**
   the distance of the subsections of the signal path to the longitudinal axis of the measuring tube is equal to zero.

10. Procedure as claimed in Claim 1,
    **characterized in that**
    the kinematic viscosity $v_{kin}$ of the gas mixture is determined taking into consideration:
    the chemical composition of the gas mixture.

11. Procedure as claimed in Claim 10, **characterized in that** the molar fraction $x_i$ of the individual components i of the gas mixture is the share of methane of the gas mixture.

**12.** Procedure as claimed in Claim 9 to 11,
**characterized in that**
the chemical composition of the gas mixture and/or the molar fractions $x_i$ of the mixture's individual components i are specified by the user.

**13.** Procedure as claimed in one of the Claims 8 to 12,
**characterized in that**
the kinematic viscosity $v_{kin}$ of the gas mixture is determined taking into consideration:

the temperature T of the gas mixture and/or
the sound velocity c of the gas mixture.

**14.** Procedure as claimed in one of the Claims 1 to 13,
**characterized in that**
the gas mixture is a biogas, consisting of the components methane, water and carbon dioxide.

**15.** Procedure as claimed in one of the Claims 1 to 14,
**characterized in that**
the rule of operation $f(Re^{mod})$ is determined, preferably once;
the first average flow velocity $v_L$ is determined periodically;
and the second average flow velocity is calculated using the formula $v_A = f(Re^{mod})*v_L$.

## Revendications

**1.** Procédé destiné à la détermination du débit d'un mélange gazeux - au moins un composant i du mélange gazeux étant un hydrocarbure - à travers un tube de mesure cylindrique avec un axe longitudinal de tube de mesure droit et un diamètre intérieur $D_I$, avec les étapes de procédé suivantes :

Détermination d'une première vitesse d'écoulement moyenne $v_L$ au moyen d'une mesure de la différence des temps de propagation de signaux acoustiques le long d'un trajet de signal ;
Détermination de la viscosité cinématique $v_{kin}$ du mélange gazeux en déterminant ou en spécifiant la fraction molaire $x_i$ des différents composants du mélange gazeux ;
Détermination d'un nombre de Reynolds modifié $Re^{mod}$ selon la formule $Re^{mod} = (v_L*D_I)/v_{kin}$,
Détermination d'une deuxième vitesse d'écoulement moyenne $v_A$ au moyen d'une fonction connue $v_A = f(Re^{mod})*v_L$ en fonction du nombre de Reynolds modifié $Re^{mod}$ et de la première vitesse d'écoulement moyenne $v_L$, l'étape de procédé de la détermination de la viscosité cinématique $v_{kin}$ précédent l'étape de procédé de la détermination du nombre de Reynolds modifié $Re^{mod}$,
$f/(Re^{mod})$ étant déterminé au moyen de l'analyse d'un rapport $v_L / v_A$ dans un banc d'étalonnage.

**2.** Procédé selon la revendication 1, **caractérisé en ce qu'**une détermination d'une vitesse du son en vue de la détermination de la fraction molaire $x_i$ des différents composants i du mélange gazeux ou de la viscosité cinétique $v_{kin}$ est répétée selon un intervalle de temps.

**3.** Procédé selon la revendication 1 ou 2, **caractérisé en ce que** la viscosité cinétique $v_{kin}$ du mélange gazeux a été déterminée par une mesure de la température du mélange gazeux et de la vitesse du son c dans le mélange gazeux, ainsi qu'à partir de grandeurs prédéfinies, lesquelles grandeurs sont nécessaires pour la détermination des propriétés spécifiques à la matière.

**4.** Procédé selon l'une des revendications précédentes, **caractérisé en ce que** la viscosité dynamique du mélange gazeux est déterminée par la spécification et/ou la mesure de l'humidité relative du mélange gazeux et de la pression du mélange gazeux et/ou de la densité du mélange gazeux en combinaison avec la viscosité cinétique $v_{kin}$ du mélange gazeux.

**5.** Procédé selon l'une des revendications précédentes, **caractérisé en ce que** l'hydrocarbure présente une fraction molaire $x_i$ d'au moins 10 % par rapport au volume total du mélange gazeux.

**6.** Procédé selon l'une des revendications précédentes, **caractérisé en ce que** suivent les étapes de procédé suivantes :
Détermination du débit volumique $Q_v = v_A*(\pi/4)*D_i^2$, et/ou du débit massique $Q_M = Q_v*\rho$, avec la densité p du mélange gazeux.

**7.** Procédé selon l'une des revendications précédentes, **caractérisé en ce que** suivent les étapes de procédé suivantes :
Indication de la deuxième vitesse d'écoulement moyenne $v_A$ et/ou du débit volumique $Q_v$ et/ou du débit massique $Q_M$.

**8.** Procédé selon l'une des revendications 1 à 7, **caractérisé en ce que** le trajet du signal est constitué de plusieurs sections partielles droites, lesquelles présentent toutes la même distance par rapport à l'axe longitudinal du tube de mesure.

**9.** Procédé selon la revendication 7, **caractérisé en ce que** la distance des sections partielles du trajet du signal par rapport à l'axe longitudinal du tube de mesure est égale à zéro.

**10.** Procédé selon la revendication 1, **caractérisé en ce qu'**est effectuée la détermination de la viscosité cinétique $v_{kin}$ du mélange gazeux en tenant compte :
de la composition chimique du mélange gazeux.

**11.** Procédé selon la revendication 10, **caractérisé en ce que** la fraction molaire $x_i$ des différents composants i du mélange gazeux est la teneur en méthane du mélange gazeux.

**12.** Procédé selon les revendications 9 à 11, **caractérisé en ce que** la composition chimique du mélange gazeux et/ou les fractions molaires $x_i$ de ses composants individuels i sont spécifiées par l'utilisateur.

**13.** Procédé selon l'une des revendications 8 à 12, **caractérisé en ce qu'**est effectuée la détermination de la viscosité cinétique $v_{kin}$ du mélange gazeux en tenant compte :

de la température T du mélange gazeux et/ou
de la vitesse du son c dans le mélange gazeux.

**14.** Procédé selon l'une des revendications 1 à 13, **caractérisé en ce que** le mélange gazeux est un biogaz, comprenant les composants méthane, eau et dioxyde de carbone.

**15.** Procédé selon l'une des revendications 1 à 14, **caractérisé en ce qu'**est effectuée une détermination, de préférence une détermination unique, de la règle de fonction $f(Re^{mod})$ ;
**en ce qu'**est effectuée une détermination périodique de la première vitesse d'écoulement moyenne $v_L$ ;
et **en ce qu'**est effectué un calcul de la deuxième vitesse d'écoulement moyenne à l'aide de la formule $v_A = f(Re^{mod})*v_L$.

Ermitteln der Durchflussgeschwindigkeit $V_L$ entlang eines Signalpfads

Ermitteln der kinematischen Viskosität $\upsilon_{kin}$

Ermitteln der modifizierten Reynoldszahlen

$$\mathrm{Re}^{\mathrm{mod}} = \frac{v_L * D_I}{\upsilon_{kin}}$$

Ermitteln der über die Fläche $(\pi/4) * D_I^{2}$ gemittelte Durchflussgeschwindigkeit

$$v_A = f(\mathrm{Re}^{\mathrm{mod}})$$

Fig. 1

EP 2 739 943 B1

**Fig. 2**

EP 2 739 943 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5052230 A
- WO 9719326 A1
- US 4103551 A
- US 4610167 A
- US 4024760 A
- US 7706986 B
- DE 102005059062 B4

- DE 102006030964 A1
- US 5835884 A
- JP 56140214 A
- US 4300400 A
- US 5546813 A
- EP 1113247 A1
- US 4331025 A

**In der Beschreibung aufgeführte Nicht-Patentliteratur**

- **T. TRESCH ; T. STAUBLI ; P. GRUBER.** Comparsion of integration methods for multipath accoustic discharge measurements. *Begleitschrift zur 6th international Conference on Innovation in Hydraulic Efficiency Measurements,* 30. August 2006